Europäisches Patentamt

European Patent Office

Office européen des brevets

(11) Publication number: **0 320 120**
**A1**

# EUROPEAN PATENT APPLICATION

(21) Application number: 88310513.2

(22) Date of filing: 09.11.88

(51) Int. Cl.4: **B65B 9/24** , **B65B 3/02** , **C08J 3/20**

The title of the invention has been amended (Guidelines for Examination in the EPO, A-III, 7.3).

(30) Priority: 10.11.87 GB 8726286

(43) Date of publication of application:
14.06.89 Bulletin 89/24

(84) Designated Contracting States:
BE DE ES FR GB GR IT LU NL

(71) Applicant: DU PONT CANADA INC.
Box 2200 Streetsville Postal Station
Mississauga Ontario L5M 2H3(CA)

(72) Inventor: Dykes, David Scott
627 Fleet Street
Kingston Ontario K7M 5A4(CA)
Inventor: Chu, Kenneth Chou
50 Quebec Street
Kingston Ontario K7K 1T7(CA)
Inventor: White, George
10 Wagner Street
Glenbuenie Ontario K0H 1S0(CA)

(74) Representative: Armitage, Ian Michael et al
MEWBURN ELLIS & CO. 2/3 Cursitor Street
London EC4A 1BQ(GB)

(54) **Apparatus and process for manufacturing concentrate capsules.**

(57) The present invention provides apparatus and process for manufacture of capsules having a thermoplastic casing and an additive therein, e.g. polyisobutlyene, encased in polyethylene. The process comprises:

a) extruding a synthetic polymer in tubular form through an annular die 11;

b) periodically injecting predetermined quantities of the additive into the extruded tube 25;

c) chopping the tube 25 in a direction transverse to the longitudinal axis of the tube, sufficiently quickly to cause the tube to collapse at the chopping plane and to seal the tube on both sides of the plane;

d) repeating steps b) and c) to form a capsule 34 having a casing of polymer sealed at each end of the tube from which the casing is made and containing additive; and

e) cooling the capsule to retain the integrity of the capsule.

FIG. 5

## CONCENTRATE CAPSULES

The present invention relates to a concentrate of a modifying agent in a synthetic thermoplastic polymeric matrix.

Synthetic thermoplastic polymers, for example polyolefins, polyesters and polyamides, are used in large quantities for a variety of end-uses. In general, synthetic thermoplastic polymers are manufactured in particulate form, and are sold for further processing into shaped articles, e.g. film, pipe, rods, sheet, moulded articles. It is common for such polymers to be blended with compounds which modify the chemical and/or physical properties of the polymer. For example, polyalkylene glycols may be added to polyolefins to reduce the formation of gel streaks in film manufacture or to reduce the incidence of film breakdown, as disclosed, for example, in Canadian Patent 961 998 to Hancock et al, which issued 1975 January 28 and U.S. Patent 4 013 622 to De Juneas et al, which issued 1977 March 22. Also, for example, polybutenes or polyisobutylenes may be added to polyethylenes for the manufacture of self-sealing or cling-stretch films, as disclosed, for example, in U.S. Patent 3 821 332 to E. Solop, which issued 1974 June 28, U.S. Patent 4 588 650 to Mientus et al, which issued 1986 May 13 and U.S. Patent 4 425 268 to B.A. Cooper, which issued 1984 January 10.

The shaped polymeric articles which contain modifying agents such as those described above, generally contain minor amounts of the modifying agents. Usually the concentration of modifying agent in the shaped article is less than 10 wt.% and most often is less than about 5 wt.%. The modifying agent may be added directly, in the shaped-article manufacturing process, or may be added in the form of a concentrate (sometimes known as a master-batch) which generally contain as high as 30-60 wt.% of the modifying agent in a synthetic thermoplastic polymeric carrier. Addition in the form of a concentrate is particularly desirable for some shaped-article manufacturers in that it is not necessary to purchase special equipment to handle the modifying agent per se, and it improves the versatility of processing operations.

Some concentrates are difficult to manufacture. For example, while melt-blending of polyisobutylene in a polyethylene matrix and extrusion to form a pelleted concentrate is possible, at concentrations above about 30 wt.% polyisobutylene in the concentrate, the polyisobutylene tends to exude and make the pellets sticky and thus difficult to handle. The present invention, in which an additive is encapsulated in a polymer, tends to overcome such difficulties. The present invention may also be used, for example, to minimize the pick-up of contaminants and reactants, e.g. moisture.

One method for encapsulating a moisture sensitive thermoplastic resin in an olefin resin sheath is disclosed in Japanese Patent Kokai 59-81120 to Toyo Seikan K.K., published 1984 May 10. In this method the moisture sensitive thermoplastic resin is extruded in strand form with a melt of olefin resin as a sheathing. The strand is cooled and impressed at short intervals after the surface of the strand has solidified but while the inner part of the strand remains in a soft condition. Pellets are then formed by cutting the strand at the impressed portions. Polyamide and olefin-vinyl alcohol copolymer resins are exemplified as the moisture sensitive polymer.

The present invention provides a process for making capsules of an additive in a casing of a synthetic thermoplastic polymer, comprising:

    a) extruding the polymer in tubular form through an annular die;

    b) periodically injecting predetermined quantities of said additive into the extruded tube;

    c) chopping the tube in a direction transverse to the longitudinal axis of the tube, sufficiently quickly to cause the tube to collapse at the chopping plane and to seal the tube on both sides of said plane;

    d) repeating steps b) and c) to form a capsule having a casing of polymer sealed at each end of the tube from which the casing is made and containing additive; and

    e) cooling said capsule to retain the integrity of the seals of the capsule.

In one embodiment the synthetic thermoplastic polymer is selected from polyamides, polyesters, polyolefins, polytetraflouroethylene and, polyacetals.

In another embodiment the polyamide is nylon 6, nylon 66, blends thereof or a nylon 6,66 copolymer.

In yet another embodiment the polyolefin is selected from homopolymers of ethylene, copolymers of ethylene and at least one $C_4$ to $C_{10}$ alpha-olefin, copolymers of ethylene and vinyl acetate, and mixtures thereof.

In a preferred embodiment, prior to the chopping step, a gas is injected at low pressure into the tube while the polymer is being extruded.

Substances falling within the scope of the term "additive" encompass those substances which are useful as modifying agents, e.g. antistatic agents, cross-linking agents, stretch-cling additives, pigments, liquid colorants, lubricants, soaps, antioxidants, UV-stabilizers, grafting agents, liquid rubbers and mixtures thereof, which may be caused to flow into the extruded tube of polymer. Additives may be, for example, in liquid or slurried form, or may be solid at Standard Temperature and Pressure (S.T.P.), viz. 20°C and 101.325 kilopascals. Such additives should be mobile at the lowest processing temperature of the present invention and should not significantly degrade or "flash off" (evaporate) at processing temperatures and pressures. Such additives may be compatible or incompatible with the polymer used for making the casing. Examples of such additives include polyisobutylenes, silicones, anhydrides, e.g. maleic anhydride, silanes, e.g. vinyl triethoxysilane, polyalkylene glycols, ethoxylated tertiary amines and salts of carboxylic acids. For example, polyethylene glycols having molecular weights of 900 to 6000, polyisobutylenes having molecular weights of 300 to 15000, lithium stearate and sodium caproate are suitable for use as additives in the present invention.

The additive may be one which is sufficiently volatile at processing temperatures that the vapour generated is sufficient to assist in providing pressure inside the polymer tube and thus diminishing any tendency of the tube to collapse.

The term "synthetic thermoplastic polymer" as used herein, and sometimes referred to as "polymer", encompasses those synthetic thermoplastic polymers capable of extrusion in the molten state, in tubular form, through extrusion dies, and which are heat fusible and settable by a cooling medium after issuance from the dies. Suitable thermoplastic polymers include polyamides, polyesters, polyolefins, and the like.

The term "polyolefin" as used herein encompasses normally solid polymers of at least one hydrocarbon alpha-olefin having 2-10 carbon atoms. Such polymers may be homopolymers or copolymers. Examples of such polyolefins include homopolymers of ethylene, propylene and 4-methyl pentene-1, copolymers of ethylene and/or propylene with at least one of butene-1, hexene-1, 4-methyl pentene-1 and octene-1, and copolymers of ethylene and vinyl acetate.

The term "polyamide" as used herein encompasses normally solid long-chain synthetic polyamides which have recurring -CONH- groups in the main polymer chain. Examples of such polyamides include nylon 6, nylon 66, nylon 610, nylon 612, nylon 9 and nylon 11 and blends thereof. It also encompasses copolymers, e.g. so-called nylon 6,66 copolymers.

The term "polyester" as used herein encompasses normally solid polymers produced by the reaction of dibasic acids and dihydric alcohols. Examples of such polymers include the reaction products of saturated acids, e.g. phthalic acid, isophthalic acid, terephthalic acid, adipic acid and azelaic acid, and of glycols, e.g. ethylene glycol, propylene glycol, diethylene glycol and dipropylene glycol.

The term "polyacetal" as used herein encompasses normally solid polymers obtained by the controlled anionic polymerization of formaldehyde to form a linear molecule of the type $-O-CH_2-O-CH_2-O-CH_2-$. They may be homopolymers or copolymers as is known in the art.

The term "annular" as used herein and applied to extrusion dies encompasses not only die slots of circular configuration but also those of other configurations, e.g. ovoid, elliptical, hexagonal.

The invention also provides a masterbatch comprising capsules containing an additive, said capsules having been made from a synthetic thermoplastic polymer selected from a polyolefin, a polyester, a polytetraflouroethylene, a polyacetal and a polyamide, in tubular form, and having the ends of such tubes collapsed and heat-fused.

In a preferred embodiment the capsules are less than about 15 mm in diameter; and more preferably are between about 4 and 8 mm in diameter.

In another embodiment, the wall thickness of each capsule is from about 0.1 to 1.0 mm, especially from 0.1 to 0.3 mm.

The invention further provides an apparatus for making capsules of an additive in a casing of a synthetic thermoplastic polymer, comprising

a) an extruder having an extrusion die attached thereto, said extrusion die having an annular die slot adapted to extrude synthetic thermoplastic polymer therethrough; a tube within the perimeter of said annular die slot, adapted to inject an additive therethrough; and means to inject gas within the radius of the annular die slot; and

b) chopping means, adjacent the extrusion die and adapted to collapse molten or semi-molten polymer tubing as it exits the die slot, and to cut through said tubing.

In a preferred embodiment the additive-injection tube is coaxial with the annular die slot and the gas-injection means comprises at least one opening in said die, between the annular die slot and additive-injection tube.

In another embodiment the additive-injection tube has valve means attached thereto which is adapted to open and close quickly.

In a further embodiment, the extrusion die has a plurality of annular die slots and associated additive-injection tubes and gas-injection means, and the chopping means is adapted to collapse and cut polymer tubing as they exit from all annular die slots.

In another embodiment the chopping means comprises a die-faced cutter. In a further embodiment, the chopping means comprises a so-called stationary cutter, i.e. a stationary blade and a moving blade which cooperate to cut the polymeric tube. In yet another embodiment the chopping means comprises a tube-pinching and sealing means, and a tube cutting means. In still another embodiment the chopping means comprises a so-called twin-blade cutter.

The invention also provides an extrusion die for extruding a synthetic polymeric material comprising an annular die slot, a coaxial additive injection tube and at least one slot adapted to inject gas from between said annular die slot and said additive-injection tube.

The various aspects of the invention are now described, with particular emphasis on capsules of polyethylene, containing polyisobutylene additive. The invention may also be more fully understood by reference to the drawings in which

Figure 1 is a plan view of an extrusion die especially adapted for use in the present process,

Figure 2 is a schematic diagram showing a cross-section of an extrusion die and stationary cutter useful in the present invention,

Figures 3 to 5 are schematic diagrams showing the formation of a capsule of the present invention, and

Figures 6 and 7 show cross-sections of die assemblies used in the Examples.

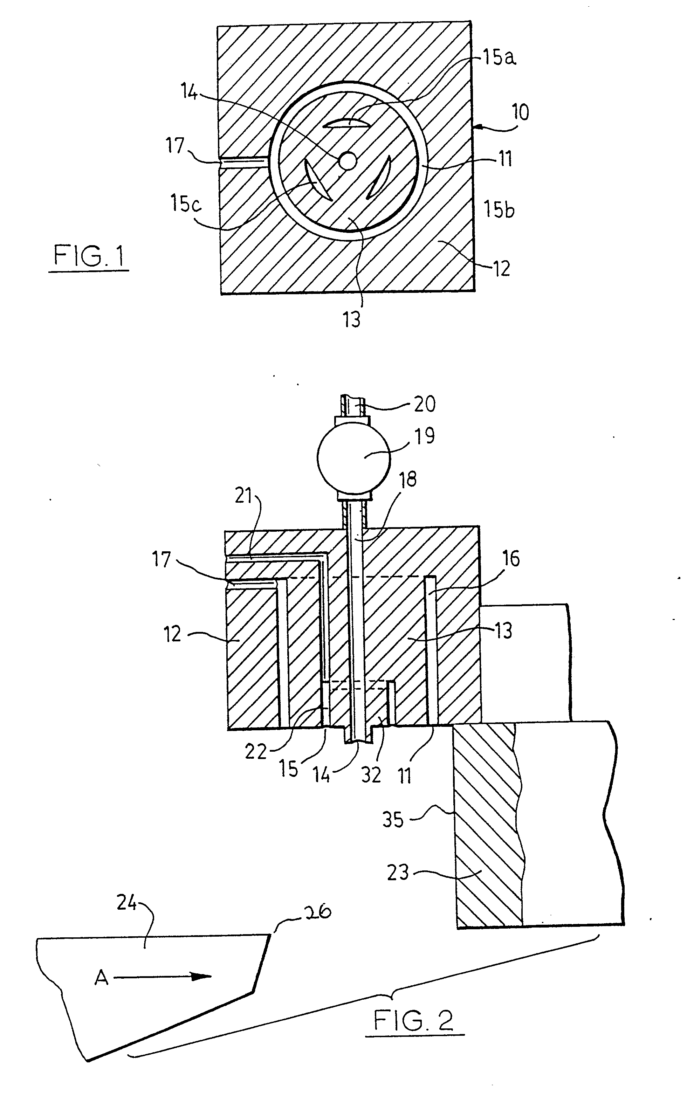

With reference to Figures 1 and 2, the extrusion die face 10 comprises an outer die land 12 and an inner die land 13 which define annular die slot 11, a liquid injection port 14 and gas injection ports 15a, 15b and 15c. Alternatively, the gas injection ports may be formed from two concentric tubes (14 and one not shown but which forms die land 13 between the gas injection tube and annular die slot 11) with a "spider" 32 therebetween which centres tube 14 (see Figure 2).

The extrusion apparatus comprises the extrusion die 10, in which the liquid injection port 14 is connected via liquid injection tube 18, on-off valve 19 and tube 20 to an additive supply tank (not shown) and pressure means e.g. pump, (not shown); in which gas injection port 15 is connected via annular gas supply tube 22 and gas header 21 to a gas supply; and annular die slot 11 is connected via annular polymer channel 16 and polymer header 17 to polymer extrusion means (not shown), e.g. an extruder. Annular die slot 11 is typically about 0.13 to 0.62 mm, e.g. 0.25 mm, wide. In addition a stationary cutter blade 23 is affixed to die 10 and is adapted to coöperate with cutter blade 24. Cutter blade 24 is adapted to move in the direction shown by arrow A.

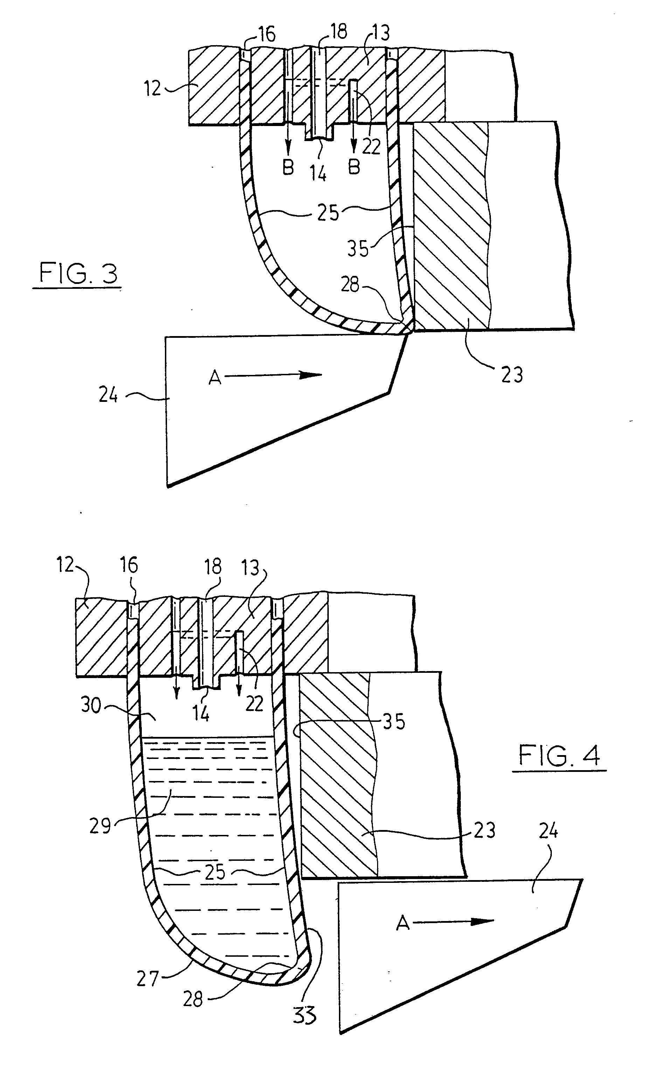

The process of the present invention may be better understood by reference to Figures 2-5. Polymer is extruded from the extruder, through header 17, channels 16 and annular die slot 11 to form a tube 25. The tube is extruded downwardly past the face 35 of stationary cutter blade 23. Cutter blade 24 is caused to move in the direction of A so that the side of tube 25 adjacent to cutter 24, i.e. portion 27 is swept towards stationary cutter blade 23 by the cutting front 26 of blade 24. Tube 25 is squeezed together as cutter blade 24 and stationary blade 23 come together, as shown in Figure 3. Portion 27 is swept against portion 33 of tube 25 and joins at seam 28. The polymer, at this stage, is sufficiently hot that seam 28 fuses to form a liquid tight joint. The lower portion of a capsule 34 has thus been formed. In part because of the propensity for tube 25 to collapse, due to "necking-in" of the polymer, it is desirable to provide a gas, e.g. air, which is introduced through gas injection port 15, via gas supply tube 22 and gas header 21 from gas supply (not shown). The pressure of the gas need not be high. Indeed, pressures of about 0.8 kPa will usually suffice. The gas flow, shown in Figures 3-5 with arrows B, usually is continuous throughout the process, as is the polymer flow. The gas flow may, however, be pulsed in such a way that gas flows just before the sealing and cutting steps.

Injection of gas is not essential to the process of the present invention. However, if gas is not used, the necking-in phenomenon of extruded polymers may well limit the amount of additive which is able to be injected into the tube for a given length of tube. The preferred pressure of gas is from 0 to 7 kPa.

Liquid additive 29 is then injected from port 14, via liquid supply tubes 18 and 20 from liquid supply (not shown). On-off valve 19 is used to permit a predetermined quantity of liquid to be injected into the sealed polymer tube. On-off valve 19 is closed, leaving a head space 30 which is filled with gas. By this time, cutter blade 24 has passed, at least as far as shown in Figure 4. Cutter blade 24 is conveniently driven in a circular motion in order to return and then collapse and cut the next portion of tube 25. Stationary cutters or die-face cutters are of this type, and are known. The cutting blades may require cooling when high production rates are desired.

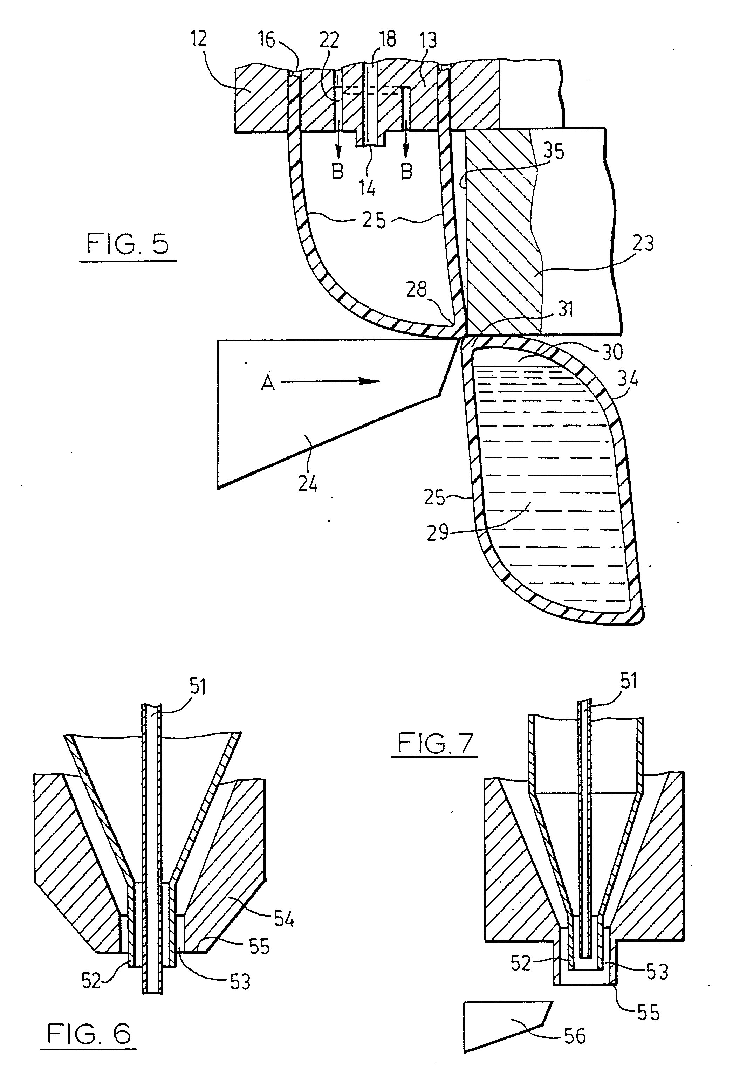

The liquid-filled tube continues to be moved past the stationary cutter face 35. By synchronizing the polymer flow, liquid injection timing and cutter blade movement, cutter blade 24 is caused to collapse and cut tube 25, again, as shown in Figure 5. The upper seam 31 of capsule 34 and the lower seam 28 of the next-to-be-formed capsule is formed in one operation. Capsule 34 is then flung clear of the extrusion assembly by the motion of cutter blade 24 and is passed to a cooling means (not shown). Cooling may be effected by air, water sprays, water baths and other means which are known for cooling extruded pellets of polymers.

The shape of the capsule is affected by many variables, e.g. the diameter of tube 25, the width of the annular extrusion die slot 11, the frequency of cutting, and the shape of the front face 26 of cutter blade 24.

The present invention has been described above, with particular reference to use of a stationary cutter. A die-face cutter may be used successfully. In such case, the extrusion die slot 11, gas injection port 15 and liquid injection port 14 are recessed sufficiently far for the capsule formation to take place.

It will be appreciated that, for a given wall thickness to the capsule, the larger the diameter of the capsule, the higher the ratio of additive to polymer. For example, for capsules having outer diameters of 1.3 cm and 0.7 cm, the ratio of additive to polymer may change from 85:15 to 75:25 respectively.

It will also be appreciated that for additives which are normally solid at S.T.P., e.g. maleic anhydride, it will be necessary to melt such additives so that they can be injected easily into the capsules. Other normally solid additives, e.g. pigments, may be injected in slurry form.

For commercial operation a plurality of extrusion die slots with associated liquid and gas-injection ports will provide a plurality of streams of tubular polymer into which liquid is injected. The die slots may well be arranged in a circle or a series of concentric circles in a die head. A single rotary cutter blade (24), or a rotary cutter having several blades mounted thereon, may then be used for cutting all streams of tubular polymer. It will be recognized, however, that with such an arrangement, the on-off valves for each stream of polymer will need to be synchronized with the arrival of the cutter blade(s) at each polymer stream.

The invention is illustrated by the following Examples:

Example 1

A die having a cross-section substantially as shown in Figure 6 was connected to a Davis Standard (trade mark) twin screw extruder, an air supply and a polyisobutylene feed. The polyisobutylene delivery tube 51 had an outside diameter of 3.2 mm. The air delivery tube 52 had an outside diameter of 5.98 mm and an inside diameter of 4.55 mm. The polymer extrusion die opening 53 of polymer die 54 had an inner diameter of 6.35 mm. Air delivery tube 52 projected beyond die face 55 by 0.8 mm and polyisobutylene delivery tube 51 projected beyond die face 55 by 3.2 mm. Delivery tube 51 had a manually-operated three-way valve associated therewith (not shown).

Sclair 1311E (trade mark) linear polyethylene was extruded through extrusion die opening 53 at a rate of about 0.28 kg/h. Air was injected through air delivery tube 52 by keeping the air pressure at about 1.6 kPa. Polyisobutylene, dyed blue for visibility, was permitted to be injected through delivery tube 51 by opening and the closing valve at approximately 2 second intervals.

The polymer tube was initially cut and sealed by manually operating a pair of shears with blades about 5 cm long. The chopping action was synchronized visually by observing the blue colour of the polyisobutylene and chopping the tube just above the polyisobutylene/air interface. The resulting pillow-shaped capsules were about 1 cm in diameter and 2.1 cm long, on the average. The rate of production was about one capsule every two seconds. The capsules contained about 84 wt.% polyisobutylene.

Example 2

The die used was substantially as shown, in cross-section, in Figure 7. The polyisobutylene delivery tube 51 had an inside diameter of 0.76 mm and an outside diameter of 1.59 mm. The air delivery tube 52 had an internal diameter of 4.55 mm and an external diameter of 5.98 mm. The internal diameter of the polymer extrusion die was 6.35 mm. The polyisobutylene delivery tube 51 was recessed by 1.6 mm. The clearance between the cutter blade 56 of a die face cutter and die face 55 was 0.15 mm.

Sclair 1311E linear polyethylene was extruded at a rate of about 0.72 kg.h, and air was injected by controlling the air pressure at 0.8 kPa. Polyisobutylene, at 2800 kPa, was injected in cycles of one opening of the supply valve per second. The valve remained open for 0.25 seconds before closing. The cutter blade speed, at the centre of the die was 41 cm/s.

The resulting pillow-shaped capsules were about 1 cm in diameter, 1.3 cm long and contained about 51 wt.% polyisobutylene.

Example 3

The die used was substantially as shown, in cross-section, in Figure 7. The polyisobutylene delivery tube 51 had an inside diameter of 1.27 mm and an outside diameter of 1.65 mm. The air delivery tube 52 had an internal diameter of 3.38 mm and an external diameter of 4.39 mm. The internal diameter of the polymer extrusion die was 4.90 mm. The clearance between the cutter blade 56 of a die face cutter and die face 55 was 0.15 mm. Four blades were attached to the cutter housing, so that each blade passed the die for each revolution of the housing. Each blade had a triangular vertical cross-section, with the forward portion of the blade being at 45° to the direction of travel of the blade.

Sclair 1311E linear polyethylene was extruded at a rate of about 2.1 kg/h, and air was injected by controlling the air pressure at 0.3 kPa. Indopol H-1500 (trade mark) polyisobutylene, at a temperature of 150°C and at a pressure of 2800 kPa, was injected in cycles of three injections per second. The oil delivery valve remained open for 0.2 seconds per injection. A tube, attached to a recirculating loop, having a pump therein was inserted between the valve and the exit from the polyisobutylene delivery tube to continually recirculate polyisobutylene while the valve was open. The pump remained operational while the valve was closed in order to prevent oil-drop formation on the end of the polyisobutylene delivery tube. The cutter was synchronized so that each blade hit the polymer tube between oil pulses. This allowed the collapsing surfaces of the seam of the capsule to be uncontaminated with polyisobutylene.

The resulting pillow-shaped capsules were about 0.9 cm in diameter, 1.5 cm long and contained about 55 wt.% polyisobutylene.

## Listing of Parts in the Drawings

10 Extrusion die face
11 Extrusion die slot
12 Outer die land
13 Inner die land
14 Liquid injection port
15 Gas injection port
16 Annular polymer channel
17 Polymer header
18 Liquid injection tube
19 On-off valve
20 Liquid supply tube
21 Gas header
22 Annular gas supply tube
23 Stationary cutter blade
24 Cutter blade
25 Polymer tube
26 Cutting front

27 Portion of polymer tube
28 Capsule lower seam
29 Liquid additive
30 Head space
31 Capsule upper seam
32 Spider
33 Portion of polymer tube
34 Capsule
35 Stationary cutter face
51 Polyisobutylene delivery tube
52 Air delivery tube
53 Polymer extrusion die opening
54 Polymer die
55 Die face
56 Cutter blade

## Claims

1. A process for making capsules of an additive in a casing of synthetic thermoplastic polymer selected from polyolefins, polyesters, polytetrafluoroethylenes, polyacetals and polyamides comprising:

a) extruding the polymer in tubular form through an annular die;

b) periodically injecting predetermined quantities of said additive into the extruded tube;

c) chopping the tube in a direction transverse to the longitudinal axis of the tube, sufficiently quickly to cause the tube to collapse at the chopping plane and to seal the tube on either side of the plane;

d) repeating steps b) and c) to form a capsule having a casing of polymer sealed at each end of the tube from which the casing is made and containing additive; and

e) cooling said capsule to retain the integrity of the seals of the capsule.

2. A process according to claim 1 wherein the additive is a modifying agent selected from antistatic agents, cross-linking agents, stretch-cling additives, pigments, liquid colorants, soaps, antioxidants, UV-stabilizers, grafting agents, liquid rubbers and mixtures thereof.

3. A process according to claim 1 or claim 2 wherein the additive is selected from polyisobutylenes, polyalkylene glycols, ethoxylated tertiary amines, silanes, silicones, anhydrides and salts of carboxylic acids.

4. A process according to any one of the preceding claims wherein the additive is selected from polyisobutylenes having molecular weights of 300 to 15000, polyethylene glycols having molecular weights of 900 to 6000, lithium stearate and sodium caproate.

5. A process according to any one of the preceding claims wherein the polymer is a polyolefin selected from homopolymers of ethylene, propylene and 4-methyl pentene-1 copolymers of ethylene and/or propylene with at least one of butene-1, hexene-1, 4-methyl pentene-1 and octene-1, and copolymers of ethylene and vinyl acetate.

6. A process according to claim 5 wherein the polymer is a polyethylene.

7. A process according to any one of the preceding claims wherein prior to step c) a gas is injected at low pressure into the tube while the polymer is being extruded.

8. A masterbatch comprising capsules containing an additive, said capsules being as made from a synthetic thermoplastic polymer selected from polyolefins, polyesters, polytetrafluoroethylenes, polyacetals and polyamides, in tubular form, having the ends of such tubes collapsed and heat-fused.

9. A masterbatch according to claim 8 wherein the additive is a modifying agent selected from the group consisting of antistatic agents, cross-linking agents, stretch-cling additives, pigments, liquid colorants, soaps, antioxidants, UV-stabilizers, grafting agents, liquid rubbers and mixtures thereof.

10. A masterbatch according to claim 8 or claim 9 wherein the additive is selected from polyisobutylenes, polyalkylene glycols, ethoxylated tertiary amines, silanes, silicones, anhydrides and salts of carboxylic acids.

11. A masterbatch according to any one of claims 8 to 10 wherein the additive is selected from polyisobutylenes having molecular weights of 300 to 15000, polyethylene glycols having molecular weights of 900 to 6000, lithium stearate and sodium caproate.

12. A masterbatch according to any one of claims 8 to 11 wherein the polymer is a polyolefin selected from homopolymers of ethylene, propylene and 4-methyl pentene-1, copolymers of ethylene and/or propylene with at least one of butene-1, hexene-1, 4-methyl pentene-1 and octene-1 and copolymers of ethylene and vinyl acetate.

13. A masterbatch according to claim 12 wherein the polymer is a polyethylene.

14. A masterbatch according to any one of claims 8 to 13 wherein the capsules each have a diameter less than about 15 mm.

15. An apparatus for making capsules of an additive in a casing of a synthetic thermoplastic polymer, comprising

a) an extruder having an extrusion die attached thereto, said extrusion die having an annular die slot adapted to extrude synthetic thermoplastic polymer therethrough; a tube within the perimeter of said annular die slot, adapted to inject an additive therethrough; and means to inject gas within the perimeter of the annular die slot; and

b) chopping means, adjacent the extrusion die and adapted to collapse molten or semi-molten polymer tubing as it exits the die slot, and to cut through said tubing.

16. An apparatus according to claim 15 wherein the additive injection tube is coaxial with the annular die slot and the gas-injection means comprises at least one opening in said die, between the annular die slot and additive injection tube.

17. An apparatus accordingly to claim 15 or claim 16 wherein the additive injection tube has valve means attached thereto which is adapted to open and close quickly.

18. An apparatus according to any one of claims 15 to 17 wherein the extrusion die has a plurality of annular die slots and associated additive-injection tubes and gas-injection means, and the chopping means is adapted to collapse and cut polymer tubing as it exits from all annular die slots.

19. An extrusion die for extruding a synthetic polymeric material comprising an annular die slot, a coaxial additive injection tube and at least one slot adapted to inject gas from between said annular die slot and said additive-injection tube.

FIG. 1

FIG. 2

FIG. 3

FIG. 4

EP 0 320 120 A1

FIG. 5

FIG. 7

FIG. 6

European Patent
Office

# EUROPEAN SEARCH REPORT

Application Number

EP 88 31 0513

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 958 171 (DECKERS)<br>* Column 2, line 7 - column 3, line 6; figures 1-4 * | 1,7,15-16,19 | B 65 B   9/24<br>B 65 B   3/02<br>C 08 J   3/20 |
| Y | | 6 | |
| A | FR-A-2 086 589 (COMPAGNIE FRANCAISE DE RAFFINAGE)<br>* Page 3, line 24 - page 5, line 25; claims 1-2; figures 2-4 * | 1,8,15 | |
| Y | | 6 | |
| X | FR-A-2 270 284 (IMPERIAL CHEMICALS INDUSTRIES)<br>* Page 1, line 33 - page 3, line 30; claims 2,6,9 * | 8-9,13 | |

TECHNICAL FIELDS
SEARCHED (Int. Cl.4)

B 65 B
C 08 J

The present search report has been drawn up for all claims

| Place of search | Date of completion of the search | Examiner |
|---|---|---|
| THE HAGUE | 07-02-1989 | NGO SI XUYEN G. |

EPO FORM 1503 03.82 (P0401)